Europäisches Patentamt

European Patent Office

Office européen des brevets

(11) Publication number: 0 638 397 A1

# EUROPEAN PATENT APPLICATION
## published in accordance with Art. 158(3) EPC

(21) Application number: 94906376.2

(22) Date of filing: 10.02.94

(86) International application number:
PCT/JP94/00208

(87) International publication number:
WO 94/17966 (18.08.94 94/19)

(51) Int. Cl.6: B25J 17/02

(30) Priority: 10.02.93 JP 22788/93
09.07.93 JP 170548/93

(43) Date of publication of application:
15.02.95 Bulletin 95/07

(84) Designated Contracting States:
DE IT SE

(71) Applicant: FANUC LTD.
3580, Shibokusa Aza-Komanba, Oshino-mura
Minamitsuru-gun,
Yamanashi 401-05 (JP)

(72) Inventor: NIHEI, Ryo
4508-18, Kamiyoshida
Fujiyoshida-shi,
Yamanashi 403 (JP)
Inventor: TERADA, Akihiro, Fanuc Mansion
Harimomi 8-207
3511-1, Shibokusa, Oshino-mura
Minamitsuru-gun,
Yamanashi 401-05 (JP)
Inventor: IWASAKI, Kyozi, Hachioji Sunny
Heights 1009
546-19, Higashiasakawa-cho
Hachioji-shi,
Tokyo 193 (JP)
Inventor: TOITA, Yasuhiro, Fanuc Mansion
Harimomi 10-102
3533-1, Shibokusa,
Oshino-mura
Minamitsuru-gun,
Yamanashi 401-05 (JP)

(74) Representative: Blumbach Weser Bergen
Kramer Zwirner Hoffmann Patentanwälte
Radeckestrasse 43
D-81245 München (DE)

(54) WRIST DEVICE OF ROBOT.

(57) A wrist device of a robot is provided for transmitting a rotational motion from a motor for driving a wrist casing through a gear device having a plurality of gears and disposed in the proximity of the wrist casing so as to rotate the wrist casing of the robot fitted to the distal end of a robot arm. A wrist driving motor (36) is disposed near the wrist casing, and the gear device includes a first gear (A) fitted to an output shaft for rotating the wrist casing (32), a second gear (B) engaging with the first gear (A) and receiving the driving force from the wrist casing driving motor (36), and gear base displacement means (12) for changing the axial distance between the first and second gears (A), (B) and rotating a rotary shaft (14) of the second gear (B) round an eccentric shaft (16) which is eccentric by a predetermined distance (a) from the rotary shaft (14) so as to adjust backlash between the first and second gears (A, B).

# Fig.1

Technical Field

The invention relates to an industrial robot and, in particular, to an improved wrist device for an industrial robot, in which the backlash between the gears for rotating the wrist of the robot can be adjusted.

Background Art

A robot wrist is mounted on the distal end of a robot arm for rotation about an axis. A driving force transmitting device for rotating the robot wrist is well known. However, the recent miniaturization of electrical motors allows a wrist casing driving motor to be provided adjacent to the the robot wrist and the rotational driving force is transmitted from the electrical motor to the robot wrist through a gear train having a plurality of gears.

However, a driving force transmitting device including a gear train essentially has backlash between the pairs of gears. The backlash directly affects the positional accuracy of the robot wrist. Thus, in order to improve the positional accuracy of an end effector mounted on the end face of the robot wrist, it is necessary to minimaize the backlash in the robot wrist.

It is, of course, possible to reduce the backlash by tight control of the machining accuracy of, and the distance between the axes of the gears during the manufacture and assembly of the robot. However, a very high level of finish is necessary to reduce backlash by tight control of the machining accuracy of the gears and the distance between the axes of the gears, which results in increasing the cost of manufacturing and assembling the robot. Furthermore, the gears wear when the robot is used for long time, and the backlash then increases. Thus, adjustment of the backlash is necessary after delivery to a user and installation in a factory, therefore only tight control of the machining accuracy of the gears is insufficient to permanemtly remove the backlash.

A device for adjusting backlash is described in Japanese unexamined Patent Publication (Kokai) No. 62-292389 in which gears for driving a robot wrist are arranged so that the center distance between the gears is adjustable. The disclosed device is so complex that the weight of the end portion of the robot arm is increased, and this results in an increased load on the motor for driving the robot arm and in reducing the positional accuracy of the robot arm. Moreover, the manufacturing cost of the robot is increased.

Disclosure of the Invention

Therefore, the object of the invention is to provide a robot wrist device which has a simple arrangement for adjusting backlash by changing the distance between the axes of the gears driving the robot wrist.

There is provided a robot wrist device for rotating a wrist casing mounted on an end portion of a robot arm, the robot wrist device transmitting a rotational driving force to a wrist casing through a gear train having a plurality of gears from a wrist casing driving motor provided near the wrist casing, in which the gear train comprises a first gear mounted on an driven shaft rotating the wrist casing; a second gear engaging the first gear and receiving the rotational driving force from the wrist casing driving motor; and a means for changing the distance between of axes of the the first and second gears by rotating a shaft of the second gear about an flange shaft provided in parallel, and at a distance from, the shaft of the second gear so as to adjust the backlash between the first and second gears.

In accordance with one aspect of the invention the means for changing the distance comprises a flange of a cylindrical plate member; and the flange shaft being provided on one end face of the flange and the shaft for the second gear being provided on another end face of the flange.

In accordance with the preferred embodiment of the invention, the means for changing the distance includes two arcuate slots about the flange shaft; and the means for changing distance being fixed at a desired angular position about the flange shaft by fixing bolts inserted through the respective slots and threaded into respective threaded holes provided in a wall of the wrist casing.

In accordance with another embodiment of the invention, the means for changing the distance includes a plurality of fixing holes provided at regular angular positions along a circle about the flange shaft; and the means for changing the distance being fixed at a desired angular position about the flange shaft by at least one fixing bolt inserted through at least one of the plurality of the fixing holes and screwed into at least one threaded hole provided in the wall of the wrist casing. Furthermore, in accordance with the advantageous embodiment, an odd number of the fixing holes is provided.

Brief Description of the Drawings

Figure 1 is a schematic section of the robot wrist according to the invention.

Figure 2 is an enlarged view of the portion indicated by II in Figure 1.

Figure 3 is a perspective illustration of the flange for rotating the shaft of the second gear about the flange shaft.

Figure 4 is a schematic illustration for explaining the operation of the means for adjusting the distance between the axes of the gears and the adjustment of the backlash.

Figure 5 is an elevation of the means for adjusting the distance between the axes of the gears with an even number of fixing holes.

Figure 6 is an elevation of the means for adjusting the distance between the axes of the gears with an odd number of fixing holes.

Best Mode for Carrying Out the Invention

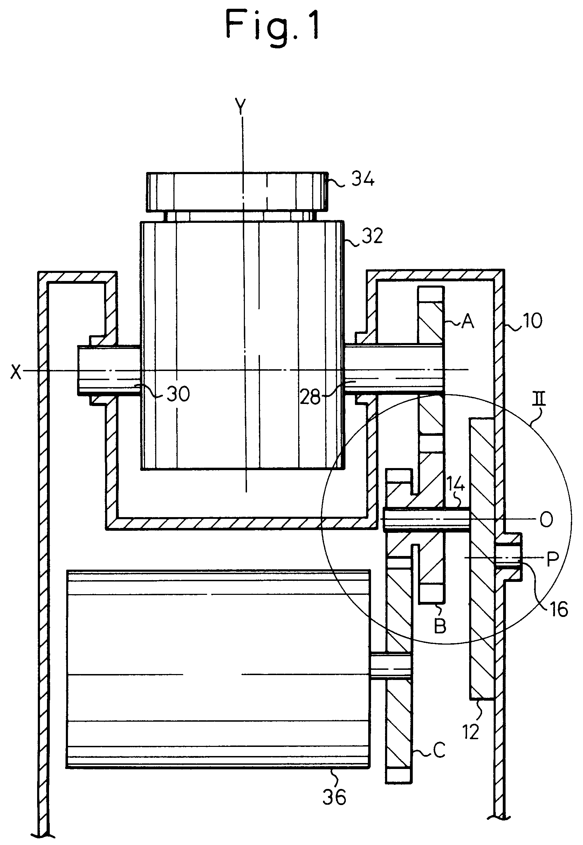

A preferred embodiment of a robot wrist device according to the invention is explained with reference to Figure 1 which is a schematic section of the robot wrist.

A robot wrist casing 32 is mounted on a distal end of a robot arm 10 for rotation about a X-axis by a driven shaft 28 and a supporting shaft 30. The driven shaft 28 is driven by a wrist casing driving motor 36 through first, second and third gears A, B and C. The driving motor is provided adjacent to the distal end of the robot arm. The wrist casing may be also driven through a speed reducer of the coaxial type.

A wrist flange 34 is provided at an end of the wrist casing 32. An end effector (not shown) is mounted on the end face of the wrist flange 34. The wrist flange 34 is rotated about a Y-axis perpendicular to the X-axis by an electrical motor and speed reducer (not shown) which are provided within the wrist casing 32.

In order to improve the positional accuracy of the wrist about the X-axis, it is preferable to reduce the backlash between all the gears forming the gear train. However, this is very difficult. Furthermore, the backlash between the first gear A mounted on the driven shaft 28 of the gear train and the second gear B directly engaging the first gear A affects the positional accuracy of the rotational movement of the wrist casing 32 the most. Thus, in the preferred embodiment of the invention, the backlash therebetween is reduced by a means for changing the distance between the axes of the first and second gears A and B which means rotates a shaft 14 of the second gear B about a flange shaft 16 provided in parallel to the shaft 14 and at a predetermined distance. In the robot wrist of Figure 1, the shaft 14 of the second gear B is mounted on a flange 12. The flange 12 is mounted on a wall of the robot arm 10 for rotation about the flange shaft 16 having a P-axis which is separated from the O-axis of the shaft 14 by a small distance. Thus, the distance between the axes of the first and second gears A and B, that is, the distance between the X- and O-axes can be adjusted by appropriately rotating the flange 12 about the flange shaft 16.

In the invention, the arrangement for adjusting the distance between the X- and O-axes, that is, the distance between the first gear A mounted on the driven shaft 28 of the gear train for rotating the wrist casing 32 and the second gear B engaging the first gear A and receiving a driving force from the wrist casing driving motor 36 is the most important. Therefore, in Figure 1, although the number of the gears is not important, the gear train for transmitting the driving force from the wrist casing diving motor 36 includes three gears A, B and C. Furthermore, the distance between the axes of the second and the third gears B and C can also be adjusted in the same manner.

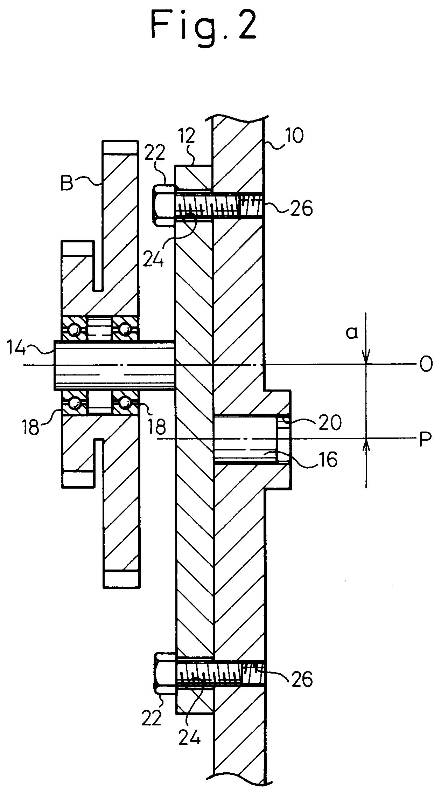

Referring to Figure 2 which is an enlarged illustration of a portion indicated by II in Figure 1, the second gear B is provided for rotation about the shaft 14 by a bearing means 18 such as a ball bearing. The shaft 14 is provided at near the center of a end face of the flange 12 and perpendicular thereto. The bearing means 18 may also be a journal bearing or a roller bearing.

The flange 12 has the flange shaft 16 provided on another end face, opposite to the shaft 14, and perpendicular thereto. The distance between the O-axis of the shaft 14 and the P-axis of the flange shaft 16 is defined as the eccentric distance "a". The flange shaft 16 is inserted into a hole 20 formed in the wall of the robot arm 10 for rotation. Thus, the flange 12 can rotate about the flange shaft 16. A sleeve (not shown) can be advantageously provided between the flange shaft 16 and the hole 20.

In order to fix the flange 12 at a desired angular position about the flange shaft 16, the flange 12 includes fixing holes 24 through the flange. Bolts 22 is inserted through the fixing holes 24. The bolts 22 are screwed into the respective blind bolt holes 26 in the wall of the robot arm 10. The flange 12 is fixed at the desired angular position after being rotated about the flange shaft 16 so as to adjust the backlash between the first and second gears A and B appropriately. Washers (not shown) can be advantageously provided between the bolts 22 and the flange 12.

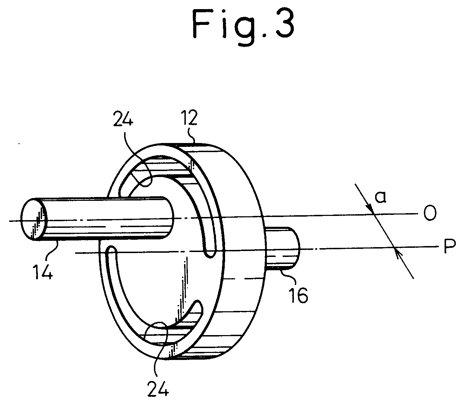

Referring to Figure 3 illustrating a perspective view of the flange 12, the flange 12 is substantially a cylindrical plate, and is provided with the shaft 14 for the second gear B on one end face and the flange shaft 16 on the other face. In Figure 3, the eccentric distance "a" is exaggerated, however, in actual, it is about 0.2mm. The eccentric distance can be changed depending on the configuration, the dimensions and accuracy of the gears.

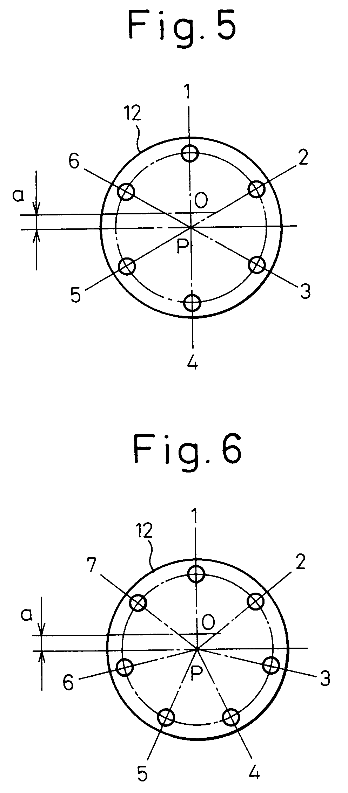

In Figure 3, the fixing holes 24 are two arcuate slots, however, they can be a plurality of holes arranged on a circle (Figures 5 and 6). When the fixing holes 24 are formed by the arcuate slots as shown Figure 3, the backlash between the first and second gears A and B can be adjusted infinitely. On the other hand, when they are the holes arrange on a circle, the backlash between the first and second gears A and B is adjusted by discrete amounts of adjustment determined by the respective angular positions of the holes.

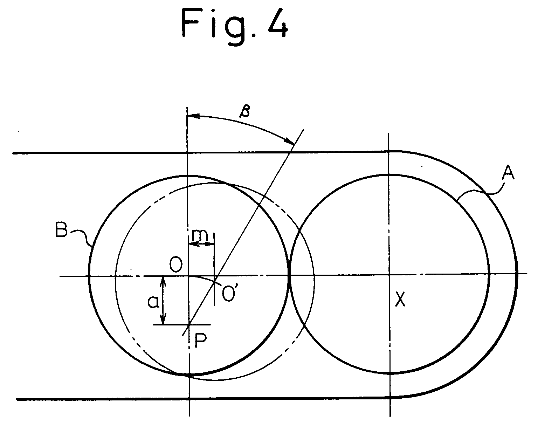

With reference to Figure 4 diagrammatically illustrating the distal end portion of the robot arm, the operation of the means for changing the center distance between the gears and the adjustment of the backlash are described hereinafter.

In Figure 4, the first gear A is mounted on the driven shaft 28 of the gear train for rotating the wrist casing 32 of Figure 1 about the X-axis. The second gar B engages the first gear A. The shaft 14 of the second gear B can be rotated about the flange shaft 16 by the flange 12. When the flange 12 is rotated about the flange shaft 16, the O-axis of the second gear B moves to point O' along a circle about the P-axis. The amount of the adjustment $\delta$ is defined as follows;

$$\delta = m \times 2 \tan \alpha \qquad (1)$$

where;
- $\alpha$ : the pressure angle of the first and second gears A and B
- m : the change of the center distance between the first and second gears A and B

Although the eccentric distance "a" is exaggerated in Figure 4, it is very small distance compared with the distance between the X- and O-axes of the first and second gears A and B (This distance is about 100mm depending on the dimensions or capacity of the robot). Therefore, the change in the distance in a direction perpendicular to a line between the axis X of the first gear A and an imaginary or designed axis of the second gear B is negligible compared with the change between the X- and O-axes of the first and second gears A and B. Thus, by neglecting this, the change of the center distance between the first and second gears A and B is obtained as follows.

$$m = a \times \sin \beta \qquad (2)$$

where;
- a : eccentric distance
- $\beta$ : angle of the adjustment of flange 12

The means for adjusting the center distance between the axes can include a plurality of the holes arranged on a circle about the P-axis as described and shown in Figures 5 and 6. Figure 5 illustrates the flange with an even number of the holes (in Figure 5, six holes are provided as an example), and Figure 6 illustrates the flange with an odd number of the holes (in Figure 6, seven holes are provided as an example).

When the holes of even number are arranged at an angle along a circle about the P-axis, each one of the holes always has a diametrically opposite hole. For example, referring to Figure 5, a fixing hole 6 is diametrically opposite to a fixing hole 3. In other words, in Figure 5, the fixing holes 3 and 6 are symmetrically positioned each other. Thus, in case of the adjustment of the backlash by rotation of 60° to the clockwise direction and in case of the adjustment of the backlash by rotation of 120° to the anti-clockwise direction (rotation of 240° to the clockwise direction), the amount of adjustment is the same each other. Therefore, if an even number of fixing holes are provided, the half of the fixing holes are not effective in the adjustment of the backlash.

On the other hand, when an odd number of fixing holes are provided, the all of the fixing holes are effective in the adjustment of the backlash, since the respective fixing holes are not symmetrically positioned. Thus, an odd number of fixing holes are advantageous compared with those of even number.

Addition to the above, when an odd number of fixing holes are provided, the two bolt holes 26 are not also symmetrically disposed. For example, in Figure 6, a bolt hole opposite to a bolt hole corresponding to the fixing hole 1 is disposed from the point diametrically opposite to the bolt hole corresponding to the fixing hole 1 by half angle between any adjacent two fixing holes, such as the fixing holes 1 and 2 or fixing holes 1 and 7, in the clockwise or counter-clockwise direction.

In Figures 5 and 6, a relatively small number of fixing holes, such as six or seven, are shown. However, in order to adjust the backlash more precisely, as many as possible fixing holes must be provided.

It may be apparent that the robot wrist device of the invention has a simple arrangement and can easily reduce any backlash having a harmful influence on the positional accuracy of the robot wrist without increasing the cost and weight of the end portion of the robot arm. Therefore, the positional accuracy of the end effector mounted on the end of the robot wrist is improved.

## Claims

1. A robot wrist device for rotating a wrist casing mounted on an end portion of a robot arm, said robot wrist device transmitting a rotational driving force to a wrist casing through a gear train having a plurality of gears from a wrist casing driving motor provided near the wrist casing, in which said gear train comprises;

a first gear mounted on an driven shaft rotating said wrist casing;

a second gear engaging said first gear and receiving said rotational driving force from said wrist casing driving motor; and

a means for changing the distance between of axes of the said first and second gears by rotating a shaft of said second gear about an flange shaft provided in parallel, and at a distance from, said shaft of said second gear so as to adjust the backlash between said first and second gears.

2. The robot wrist device according to claim 1, in which said means for changing the distance comprises a flange of a cylindrical plate member; and

said flange shaft being provided on one end face of said flange and said shaft of said second gear being provided on another end face of said flange.

3. The robot wrist device according to claim 2, in which said means for changing the distance includes two arcuate slots about said flange shaft; and

said means for changing distance being fixed at a desired angular position about said flange shaft by fixing bolts inserted through said respective slots and threaded into respective threaded holes provided in a wall of said wrist casing.

4. The robot wrist device according to claim 2, in which said means for changing the distance includes a plurality of fixing holes provided at regular angular positions along a circle about said flange shaft; and

said means for changing the distance being fixed at a desired angular position about said flange shaft by at least one fixing bolt inserted through at least one of said plurality of said fixing holes and screwed into at least one threaded hole provided in the wall of said wrist casing.

5. The robot wrist device according to claim 4, in which an odd number of said fixing holes is provided.

# Fig.1

# Fig.2

# Fig.3

# Fig. 4

# Fig.5

# Fig.6

| | International application No. |
|---|---|
| | PCT/JP94/00208 |

**A.   CLASSIFICATION OF SUBJECT MATTER**

Int. Cl$^5$   B25J17/02

According to International Patent Classification (IPC) or to both national classification and IPC

**B.   FIELDS SEARCHED**

Minimum documentation searched (classification system followed by classification symbols)

Int. Cl$^5$   B25J17/02, 19/00

Documentation searched other than minimum documentation to the extent that such documents are included in the fields searched

| Jitsuyo Shinan Koho | 1926 – 1994 |
|---|---|
| Kokai Jitsuyo Shinan Koho | 1971 – 1994 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| Y | JP, U, 62-88587 (Tokico Ltd.),<br>June 6, 1987 (06. 06. 87), (Family: none) | 1-5 |
| Y | JP, A, 64-20993 (Fanuc Ltd.),<br>January 24, 1989 (24. 01. 89), (Family: none) | 1-5 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| March 29, 1994 (29. 03. 94) | April 19, 1994 (19. 04. 94) |

| Name and mailing address of the ISA/ | Authorized officer |
|---|---|
| Japanese Patent Office | |
| Facsimile No. | Telephone No. |

Form PCT/ISA/210 (second sheet) (July 1992)